# NEUE EUROPÄISCHE PATENTSCHRIFT

(11) **EP 3 444 884 B2**
(45) Veröffentlichungstag und Bekanntmachung des Hinweises auf die Entscheidung über den Einspruch: **14.12.2022**
(45) Hinweis auf die Patenterteilung: 26.02.2020
(21) Anmeldenummer: 18000677.7
(22) Anmeldetag: 15.08.2018
(51) Int. Cl.: H01M 8/18, H01M 8/0213, H01M 8/0221, H01M 8/0226

(54) **ELEKTRISCH LEITFÄHIGE KONTAKTPLATTE FÜR ELEKTROCHEMISCHE ZELLEN, ELEKTROCHEMISCHE ZELLE MIT EINER SOLCHEN KONTAKTPLATTE SOWIE VERFAHREN ZU DEREN HERSTELLUNG**
ELECTRICALLY CONDUCTIVE CONTACT PLATE FOR ELECTROCHEMICAL CELLS, ELECTROCHEMICAL CELL WITH SUCH A CONTACT PLATE AND METHOD FOR THE PRODUCTION THEREOF
PLAQUE DE CONTACT ÉLECTROCONDUCTRICE POUR CELLULES ÉLECTROCHIMIQUES, CELLULE ÉLECTROCHIMIQUE DOTÉE D'UNE TELLE PLAQUE DE CONTACT AINSI QUE SON PROCÉDÉ DE FABRICATION

(30) Priorität: 17.08.2017 DE 102017007718
(43) Veröffentlichungstag der Anmeldung: 20.02.2019
(73) Patentinhaber: Fraunhofer-Gesellschaft zur Förderung der angewandten Forschung e.V., 80686 München (DE)
(72) Erfinder: Fischer, Peter Dr., 76135 Karlsruhe (DE); Caglar, Lautet Burak Dr., 86153 Augsburg (DE); Hübner, Christof Dr., F-67630 Niederlauterbach (FR); Weiss, Patrick, 76137 Karlsruhe (DE); Tübke, Jens Dr., 76337 Waldbronn (DE)
(74) Vertreter: Lichti - Patentanwälte Partnerschaft mbB

(56) Entgegenhaltungen:
- EP-A1- 2 560 228
- US-A- 5 882 570
- US-A1- 2010 127 428
- US-A1- 2013 037 760
- US-B2- 8 728 679
- Sven Egelkraut, Stefan Zeltner, Martin März, Bernd Eckardt: "Wärmeleitfähige Kunststoffe für Entwärmungsaufgaben", Technical report - FRAUNHOFER, July 2008 (2008-07), pages 1-13,

## Beschreibung

Die Erfindung betrifft eine elektrisch leitfähige Kontaktplatte für Redox-Flow-Zellen, welche aus wenigstens einem thermoplastischen Polymer mit hierin eindispergierten, elektrisch leitfähigen Partikeln auf der Basis von Graphit gebildet ist, eine mit wenigstens einer solchen elektrisch leitfähigen Kontaktplatte ausgestattete Redox-Flow-Zelle Zelle sowie Verfahren zur Herstellung elektrisch leitfähiger Kontaktplatten der vorgenannten Art."

Elektrochemische Zellen mit als Elektroden und/oder Stromab- bzw. -zuleitern dienenden, elektrisch leitfähigen Kontaktplatten sind in vielfältiger Ausgestaltung bekannt, wie beispielsweise in Form von galvanischen Zellen zur Gewinnung von elektrischem Strom infolge Verwendung verschiedener Elektrodenmaterialien, Elektrolysezellen zur elektrochemischen Gewinnung von Stoffen, Elektrodialysezellen zur Abtrennung von Ionen aus Lösungsmitteln oder Flüssigkeiten unter Verwendung von Ionenaustauschermembranen oder Elektroanalysezellen zur elektrochemischen Untersuchung von Flüssigkeiten.

Die häufigsten Anwendungsbeispiele elektrochemischer Zellen stellen Akkumulatorzellen und Brennstoffzellen dar, wobei letztere zur Erzeugung elektrischer Energie durch Direktumwandlung chemischer Energie aus Oxidationsprozessen dienen. Brennstoffzellen umfassen in der Regel zwei oder mehr durch eine für den Brennstoff permeable Membran getrennte Kammern mit jeweils einer, als Kontaktplatte ausgestalteten Elektrode, welche über einen Elektrolyt leitend miteinander in Verbindung stehen, wobei den beiden Kammern die zu oxidierenden Substanzen bzw. der Brennstoff und ein Oxidationsmittel in flüssiger oder gasförmiger Phase kontinuierlich zugeführt werden. Beispielhaft seien in diesem Zusammenhang Wasserstoff- und Methanol-Brennstoffzellen erwähnt.

Bei Akkumulatorzellen handelt es sich um wiederaufladbare Stromspeicher, bei deren Aufladung elektrische Energie in chemische Energie umgewandelt wird. Ein spezieller Vertreter von Akkumulatorzellen stellen die auch als "Flussbatterien" bezeichneten Redox-Flow-Zellen dar, wie sie Gegenstand der vorliegenden Erfindung sind. Solche Redox-Flow-zellen vermögen elektrische Energie in chemischen Verbindungen zu speichern, wobei die Reaktionspartner üblicherweise in einer in Lösungsmitteln gelösten Form oder als Gase vorliegen. Die beiden energiespeichernden Elektrolyten zirkulieren dabei in voneinander getrennten Kreisläufen innerhalb einer jeweiligen Halbzelle, wobei die Halbzellen mittels einer zum Zwecke des Ionenaustausches ionenpermeablen Membran voneinander getrennt sind. Die elektrische Energie bzw. die elektrische Leistung kann daher praktisch beliebig getrennt skaliert werden. Als elektrisch leitende Elektroden gelangen in der Regel solche auf Kohlenstoffbasis - oder genauer auf Graphitbasis - zum Einsatz, welche hohe Wasserstoff- bzw. Sauerstoffüberspannungen besitzen, aber gleichwohl hohe Reaktionsgeschwindigkeiten und somit hohe Leistungsdichten gewährleisten. Zwecks hoher Leistungsdichten hat es sich ferner als vorteilhaft erwiesen, wenn die Elektroden eine große Oberfläche aufweisen, weshalb häufig poröse Elektrodenmaterialien mit einer großen spezifischen Oberfläche eingesetzt werden. Der als Energiespeicher dienende Elektrolyt kann dann entweder im sogenannten Flow-By-Betrieb an den Elektroden vorbeigeführt werden, oder er wird im sogenannten Flow-Through-Betrieb durch die Elektroden hindurchgeführt. Als poröse Elektroden- oder Elektrodenbeschichtungsmaterialien finden hierbei beispielsweise Vliese, Filze, Papiere, beschichtete Membranen oder andere Diffusionslagen aus porösen Materialien auf der Basis von Graphit Verwendung. Bei den Elektrolyten kann es sich beispielsweise um Vanadiumsalze, Natriumbromid und dergleichen handeln.

Zur elektrischen Kontaktierung von Redox-Flow-Zellen können ihre Halbzellen oder - im Falle einer Serienanordnung von mehreren Halbzellen - zumindest die jeweils äußeren, entgegengesetzt angeordneten Halbzellen mit elektrisch leitfähigen, zumeist etwa planaren Kontaktplatten bzw. -lagen aus Kohlenstoffmaterialien versehen werden, welche mit den jeweiligen Elektroden in elektrisch leitendem Kontakt stehen oder auch einstückig mit diesen gefertigt sind und unter Verschluss der Halbzellen zur Stromentnahme bzw. -zufuhr dienen. Die elektrisch leitenden Kontaktplatten, welche insbesondere aus Mischungen aus extrinsisch leitfähigen Polymeren mit Kohlenstoff- bzw. Graphitmaterialien gefertigt sein können, können insbesondere für den Flow-By-Betrieb oberflächige Strukturen besitzen, welche eine Fluidführung des Elektrolyten an einer jeweiligen Elektrode vorbei ermöglichen. Die einer jeweiligen Elektrode zugeordneten Kontaktplatten sind dabei zumeist in eine üblicherweise als Durchflussrahmen bezeichnete Stützstruktur eingebettet, um eine Fluidführung des Elektrolyten an den Elektroden vorbei in eine jeweilige Halbzelle zu ermöglichen. Während bei Wasserstoff-/Sauerstoff-Brennstoffzellen die Fluidführung durch die porösen Kohlenstoffplatten hindurch erfolgen kann, ist dies bei Redox-Flow-Zellen aufgrund deren Energiespeichermedien auf der Basis von zumeist ionisch leitenden Elektrolytlösungen nicht möglich. Die sogenannten Durchflussrahmen zur Aufnahme der mit den Elektroden in leitendem Kontakt stehenden Platten bzw. Lagen sind in der Regel aus Kunststoffen gebildet, welche elektrisch isolierend und gegenüber den eingesetzten Elektrolyten chemisch inert sein müssen.

Bei aus dem Stand der Technik bekannten Redox-Flow-Zellen werden die vorgenannten Komponenten - die Durchflussrahmen mit den hiervon getragenen Elektroden und den hierin aufgenommenen oder einstückig mit diesen gebildeten, elektrisch leitfähigen Kontaktplatten, die Membrane sowie die Redox-Flow-Zelle endseitig verschließende Endplatten mit letztere von den leitfähigen Kontaktplatten isolierenden Isolationsplatten - anlässlich der Herstellung der Redox-Flow-Zelle üblicherweise zu einem Zellstapel kombiniert, wie dies in ähnlicher Weise auch bei der Herstellung von bekannten Brennstoffzellen der Fall ist, indem die einzelnen Halbzellen elektrisch seriell verschaltet werden und die elektrisch leitfähigen Kontaktplatten als Bipolarplatten wirken können. Zur Gewährleistung einer einwandfreien Dichtigkeit eines solchen Aufbaus sind dabei verschiedene Dichtungsanordnungen erforderlich, was den Aufbau herkömmlicher Redox-Flow-Zellen in erheblichem Maße verkompliziert. So muss beispielsweise einerseits die Membran gegenüber dem Durchflussrahmen, andererseits die hierein eingebettete leitfähige Kontaktplatte ebenfalls gegenüber dem Durchflussrahmen abgedichtet werden. Eine jeweilige Halbzelle selbst muss wiederum gegenüber der/den benachbarte(n) Halbzelle(n) bzw. des benachbarten Fluidkreislaufs des Elektrolyten sowie nach außen abgedichtet werden, was aufwändige Dichtungsanordnungen aus relativ teuren, chemisch inerten Materialien erfordert.

Als hinsichtlich einer zuverlässigen Abdichtung am kritischsten erweist sich in der Praxis oftmals die Abdichtung der in der Regel porösen, elektrisch leitfähigen Kontaktplatten, welche mit einer jeweiligen Elektrode in elektrisch leitendem Kontakt stehen, gegenüber dem zu ihrer Einbettung dienenden Durchflussrahmen, welche zwingend den Einsatz von aufwändigen Dichtungselementen erfordert, weil die üblicherweise mit Graphitpartikeln oder anderen Kohlenstoffmodifikationen, wie Ruß oder dergleichen, hochverfüllten Kontaktplatten auf Polymerbasis nicht mit dem üblicherweise gleichfalls aus Kunststoff gefertigten Durchflussrahmen oder anderen Gehäuseteilen verschweißt werden können. Dies ist unter anderem dadurch bedingt, dass hohe Anteile an Graphit oder anderen Kohlenstoffmodifikationen nach Art eines Trennmittels wirken, welche einer stoffschlüssigen Anbindung an plastifizierbare Polymermaterialien mittels Verschweißen bzw. Verschmelzen entgegenstehen. Andererseits ist ein hoher Füllgrad von in der Regel mindestens etwa 80 Mass.-% (bezogen auf die gesamte Kontaktplatte) an elektrisch leitfähigen Partikeln aber notwendig, um durch Perkolation ein Netzwerk aus elektrisch leitfähigen Pfaden in der Polymermatrix der Kontaktplatte auszubilden und auf diese Weise die gewünschten elektrischen Leitfähigkeiten von z.B. mindestens 50 S/cm parallel zur Plattenebene ("in-plane") bzw. mindestens etwa 5 S/cm senkrecht zur Plattenebene ("through-plane") zu erreichen.

Der Auswahl an für solche Dichtungselemente zur Abdichtung der Kontaktplatte gegen deren Durchflussrahmen in Betracht kommenden Elastomeren sind dabei insbesondere aufgrund der chemisch sehr aggressiven Energiespeichermedien enge Grenzen gesetzt. So bedingen chemisch stabile Elastomere aufwändige Entwicklungen von geeigneten Fertigungstechnologien für derartige Dichtungselemente, z.B. durch Vulkanisieren oder Spritzgießen, wodurch sich insbesondere die Erzeugung in kleinen Stückzahlen und/oder mit verschiedenen Geometrien als unrentabel erweist. Sofern andererseits nur gering verfüllte Kontaktplatten eingesetzt werden, solassen sich diese zwar mit dem Durchflussrahmen verschweißen oder lassen sich beispielsweise mittels Zweikomponenten-Spritzgießen Verbunde aus einem jeweiligen Durchflussrahmen mit hierin aufgenommener Kontaktplatte der Elektrode direkt erzeugen, doch nimmt die elektrische Leitfähigkeit und somit die Leistungsfähigkeit der Redox-Flow-Batterie mit abnehmenden Füllgrad an kohlenstoffbasierten Partikeln drastisch ab. Zudem gestalten sich auch solche Herstellungsverfahren für Verbunde aus dem Durchflussrahmen und der elektrisch leitfähigen Kontaktplatte als aufwändig und erfordern insbesondere aufgrund der notwendigen Werkzeuge hohe Investitions- sowie auch Energiekosten. Entsprechendes gilt für die übrigen Dichtungselemente zur gegenseitigen Abdichtung der vorgenannten Komponenten, welche wiederum mittels Vulkanisieren oder Spritzgießen hergestellt werden müssen.

Die EP 1 367 664 B1 beschreibt ein Verfahren zur Herstellung einer Kontaktplatte nach Art einer Bipolarplatte für elektrochemische Zellen auf Basis von Polypropylen mit einem hohen Anteil von mindestens 80 Mass.-% an hierin eindispergierten Graphit, wie z.B. in Form von Graphitpartikeln mit einem Durchmesser von etwa 300 µm. Auf diese Weise lassen sich zwar hohe elektrische Leitfähigkeiten erzielen, doch lässt sich das thermoplastische Polypropylen aufgrund des hohen Füllgrades an Graphit nicht mehr einwandfrei plastifizieren, um es z.B. mit einem Durchflussrahmen oder anderen, nicht elektrisch leitfähigen Gehäuseteilen verschweißen zu können, weshalb beim Spritzgießen der Kontaktplatte sogleich Dichtungsnuten zum Einbringen von Dichtungen vorgesehen werden, was in den vorgenannten Nachteilen resultiert.

Aus den DE 10 2014 103 291 A1 und DE 10 2013 107 516 A1 sind ferner Redox-Flow-Zellen bekannt, deren als Stromabnehmer dienende Kontaktplatten mit den Elektroden aus mit elektrisch leitfähigen Partikeln befüllten thermoplastischen Polymeren mit den sie tragenden Durchflussrahmen des gleichfalls thermoplastischen Gehäuses verschweißt sind, indem sie entweder als integrales Spritzgussteil ausgebildet sind (DE 10 2014 103 291 A1) oder miteinander verschweißt sind (DE 10 2013 107 516 A1). Ergänzend hierzu ist der DE 10 2012 024 753 A1 ein mittels Spritzgießen umschlossener, elektrisch isolierender Rahmen für eine Redox-Flow-Zelle zu entnehmen, welcher eine oder mehrere form-und kraftschlüssig integrierte, elektrisch leitfähige Bipolarplatte(n) enthält. Etwaige Füllgrade der Kontaktplatten sind indes ebenso wenig offenbart wie hiermit erzielbare elektrische Leitfähigkeiten.

Darüber hinaus offenbart beispielsweise die DE 102 61 482 A1 eine für Polymerelektrolytmembran-Brennstoffzellen (PEM) vorgesehene Bipolarplatte mit einem umlaufenden Rahmen aus elektrisch isolierenden Werkstoffen sowie einem von diesem Rahmen umschlossenen, elektrisch leitfähigen inneren Bipolarplattenbereich, in welchem Kanäle für Gase oder Kühlmittel vorgesehen sind. Die Membranelektrodeneinheit mit der Polymerelektrolytmembran der PEM ist mittels einer Elastomerdichtung an dem Rahmen der Bipolarplatte fixiert. Eine weitere, für Brennstoffzellen vorgesehene Bipolarplatte auf Kunststoffbasis, welche in ihrem zentralen Bereich elektrisch leitfähig und in ihrem Randbereich elektrisch isolierend ausgebildet ist, ist z.B. aus der DE 10 2011 120 802 A1 bekannt. Eine ähnliche Bipolarplatte für Brennstoffzellen ergibt sich beispielsweise aus der US 2010/0047650 A1.

Die US 2013/0 037 760 A1 (EP2560228 A1) beschreibt eine Bipolarplatte für Redox-Flow-Zellen, welche aus einer elektrisch leitfähigen Zusammensetzung aus thermoplastischen Polymeren mit einem kohlenstoffhaltigen Material auf der Basis von Graphit und/oder Ruß gefertigt ist, wobei der Anteil des kohlenstoffhaltigen Materials zwischen 20 und 150 Mass.-% (bezogen auf 100 Mass.-% der thermoplastischen Polymermatrix) beträgt. Darüber hinaus enthält die Polymermatrix der Bipolarplatte einen Anteil zwischen 1 und 10 Mass.-% an Kohlenstoff-Nanoröhren (wiederum bezogen auf 100 Mass.-% der thermoplastischen Polymermatrix). Bei dem kohlenstoffhaltigen Material auf der Basis von Graphit kann es sich um, auch als "flake graphite" bezeichneten, flockenförmigen natürlichen Graphit handeln, welcher in Form von isolierten, flachen Partikeln mit hexagonalen Kanten vorliegt, sofern letztere nicht zerbrochen worden sind. Darüber hinaus kann es sich um laminaren, sphärischen oder expandierten Graphit handeln, wobei letzterer dadurch erhalten wird, indem z.B. Naturgraphit in Gegenwart einer Säure und eines Oxidationsmittels unter Wärmeeinwirkung zu Graphenoxid umgesetzt wird, welches anschließend zu expandiertem Graphit reduziert wird. Allerdings hat sich gezeigt, dass einerseits bei den sehr hohen Füllgraden einer solchen Bipolarplatte mit den vorgenannten Graphitmodifikationen zwar sehr hohe elektrische Leitfähigkeiten erreicht werden können, wie sie im Grunde bei einer Redox-Flow-Zelle gar nicht erforderlich sind, aber sich das thermoplastische Polymermaterial nicht mehr verschweißen bzw. aufschmelzen lässt, was wiederum zu der eingangs geschilderten Abdichtungsproblematik gattungsgemäßer Redox-Flow-Zellen führt. Andererseits führen hinreichend geringe Füllgrade der vorgenannten Graphitmodifikationen, welche eine Verschweißbarkeit der thermoplastischen Polymermatrix der Bipolarplatte noch gewährleisten, zu einer in einigen Fällen zwar (gerade) noch hinreichenden elektrischen Leitfähigkeit, welche der Gesamtleistung der Redox-Flow-Zelle aber unüberwindbare Grenzen setzt.

Eine ähnliche Bipolarplatte, welche unter anderem in Redox-Flow-Zellen Anwendung finden kann, ist der CN 107 046 140 A zu entnehmen, welche ebenfalls aus einer Polymermatrix mit hierin eindispergiertem expandiertem Graphit oder auch flockenförmigem natürlichem Graphit "flake graphite" der vorgenannten Art besteht und zusätzlich Kohlenstoff-Nanoröhren enthalten kann.

Die US 2002/0180091 A1 beschreibt ein Verfahren zur Herstellung von Bipolarplatten für herkömmlichen Brennstoffzellen, insbesondere für Polymerelektrolytmembran-Brennstoffzellen ("POM"). Hierbei wird eine mit einem ungehärteten Harz imprägnierte Graphitfolie zerkleinert, woraufhin die mit dem ungehärteten Harz beschichteten, zerkleinerten Folienpartikel zu der Bipolarplatte geformt werden, indem das Harz ausgehärtet wird. Zur Verbesserung der elektrischen Leitfähigkeit können ferner Kohlenstofffasern und Kohlenstoff-Nanoröhren zugesetzt werden. Indes erweist sich eine solche, für Brennstoffzellen vorgesehene Bipolarplatte für gattungsgemäße Redox-Flow-Zellen als allenfalls sehr bedingt geeignet, da das aushärtbare duroplastische Harzes - hier: in Form eines Phenolharzes - eine Verschweißbarkeit der Bipolarplatte ausschließt, so dass sich wiederum die eingangs geschilderte Dichtungsproblematik ergäbe, zumal der sehr hohe Anteil an Graphit bzw. Kohlenstoff eine Verschweißbarkeit der Bipolarplatte auch im Falle einer - in der Druckschrift nicht offenbarten - thermoplastischen Imprägnierung verhinderte.

Die US 7 494 740 B2 beschreibt schließlich ein elektrisch leitfähiges Pulvermaterial sowie ein hieraus durch Extrudieren oder Spritzgießen hergestelltes Kunststoff-Formteil mit einem solchen Pulvermaterial, bei welchem es sich wiederum unter anderem um eine Bipolarplatte für herkömmliche Brennstoffzellen handeln kann. Bei dem Pulvermaterial kann es sich unter anderem um plättchenförmigen Graphit mit einer Kantenlänge zwischen 50 µm und 1000 µm und mit einer Dicke zwischen 5 µm bis 50 µm handeln, welcher durch Zerkleinerung von expandierten Graphitfolien erhalten worden und derart angeordnet ist, dass die Flächen der Partikel vornehmlich parallel zueinander ausgerichtet sind, wobei die Graphitpartikel mit einem pulverförmigen fluorierten Polymer beschichtet sind. Während der Polymeranteil zwischen 10 und 40 Mass.-%, insbesondere zwischen 15 und 30 Mass.-% beträgt, beträgt der Anteil an Graphitpartikeln zwischen 60 und 90 Mass.-%, insbesondere zwischen 70 und 85 Mass.-%. Indes erweist sich eine unter Verwendung eines solchen Pulvermaterials erzeugte Bipolarplatte gleichfalls für Redox-Flow-Zellen nur sehr bedingt als geeignet, weil das fluorierte Polymer auch dann, wenn es sich um ein thermoplastisches Polymer handelt, in dem fertigen Compound nicht mehr verschweißt werden kann, was wiederum in der eingangs beschriebenen Abdichtungsproblematik von Redox-Flow-Zellen sorgt.

Der Erfindung liegt die Aufgabe zugrunde, eine speziell für Redox-Flow-Zellen geeignete Kontaktplatte, eine mit wenigstens einer solchen Kontaktplatte ausgestattete Redox-Flow-Zelle sowie ein Verfahren zur Herstellung einer solchen Kontaktplatte der eingangs genannten Art auf einfache und kostengünstige Weise dahingehend weiterzubilden, dass unter zumindest weitestgehender Vermeidung der vorgenannten Nachteile eine hohe elektrische Leitfähigkeit der Kontaktplatte sichergestellt ist, die Kontaktplatte aber gleichwohl eine stoffschlüssige Anbindung an einen Durchflussrahmen oder an eine andere Komponente des Gehäuses der Redox-Flow-Zelle gewährleistet.

Erfindungsgemäß wird diese Aufgabe bei einer Kontaktplatte der eingangs genannten Art dadurch gelöst, dass zumindest einige der elektrisch leitfähigen Partikel von folienförmigen Graphitplättchen aus expandierter Graphitfolie mit einem Verhältnis von Dicke zu maximalem Durchmesser von höchstens 0,3 gebildet sind, deren Anteil zwischen 40 Mass.-% und 65 Mass.-%, bezogen auf die Gesamtmasse des wenigstens einen thermoplastischen Polymers einschließlich der elektrisch leitfähigen Partikel auf der Basis von Graphit, beträgt, wobei die Kontaktplatte aufgrund Schmelzfähigkeit schweißbar ist.

Bei einer gattungsgemäßen Redox-Flow-Zelle sieht die Erfindung zur Lösung dieser Aufgabe ferner vor, dass sie mit wenigstens einer solchen Kontaktplatte ausgestattet ist.

In verfahrenstechnischer Hinsicht sieht die Erfindung zur Lösung dieser Aufgabe schließlich ein Verfahren zur Herstellung einer elektrisch leitfähigen Kontaktplatte für Redox-Flow-Zellen der eingangs genannten Art vor, welches durch die folgenden Schritte gekennzeichnet ist:
(a) Bereitstellen einer elektrisch leitfähigen expandierten Graphitfolie;
(b) Zerkleinern der expandierten Graphitfolie unter Erhalt von elektrisch leitfähigen, folienförmigen Graphitplättchen mit einem Verhältnis von Dicke zu maximalem Durchmesser von höchstens 0,3;
(c) Eindispergieren der folienförmigen Graphitplättchen mit einem Anteil zwischen 40 Mass.-% und 65 Mass.-%, bezogen auf die Gesamtmasse des wenigstens einen thermoplastischen Polymers einschließlich der elektrisch leitfähigen Partikel auf der Basis von Graphit, in wenigstens ein plastifiziertes thermoplastisches Polymer; und
(d) Formen der Kontaktplatte aus dem mit den im Wesentlichen folienförmigen Graphitplättchen versetzten, thermoplastischen Polymer zu der Kontaktplatte mittels thermoplastischer Verarbeitungsverfahren, insbesondere Heißpressen oder Spritzgießen,
um die aufgrund Schmelzfähigkeit schweißbare Kontaktplatte zu erhalten.

Bei für Kontakt- bzw. Bipolarplatten gemäß dem Stand der Technik üblicherweise eingesetzten Graphitpartikeln einschließlich annähernd isotroper Graphite, wie beispielsweise Kugelgraphit, muss zur Erzielung hoher elektrischer Leitfähigkeiten durch Perkolation ein Netzwerk an elektrisch leitfähigen Partikeln in der Polymermatrix der Kontaktplatte ausgebildet werden, wobei die Leitfähigkeit oberhalb der sogenannten Perkolationsschwelle des jeweiligen Kompositmaterials (thermoplastisches Polymer/leitfähige Partikel) exponentiell mit dem Füllgrad zunimmt, weshalb in der Regel Füllgrade von mehr als etwa 80 Mass.-% eingestellt werden. Bei nicht isotropen Graphitpartikeln, wie beispielsweise nach Art von Fasern oder flockenförmigem Naturgraphit ("flake graphite"), spielt zusätzlich deren Aspektverhältnis und deren Ausrichtung in dem Kompositmaterial eine Rolle, weshalb die Perkolation solcher anisotroper Materialien experimentell ermittelt werden muss, aber gleichfalls etwa entsprechende Füllgrade erfordert, um die notwendige elektrische Leitfähigkeit zu erzielen. Erfindungsgemäß wurde nun überraschenderweise gefunden, dass im Falle von leitfähigen Partikeln in Form von folienförmigen Graphitplättchen, welche - wie weiter unten noch näher erläutert - von grob geschredderter expandierter Graphitfolie gebildet sind, bei deutlich geringen Füllgraden der Polymermatrix hohe elektrische Leitfähigkeiten erzielt werden können, so dass der Füllgrad gegenüber dem Stand der Technik auf ein Maß verringert werden kann, bei welchem das verfüllte thermoplastische Polymermaterial der Kontaktplatte schmelzfähig bleibt und folglich eine stoffschlüssige Anbindung des thermoplastischen Matrixpolymers durch Verschweißen bzw. Verschmelzen desselben mit einem Durchflussrahmen oder einem beliebigen Teil des Gehäuses der Redox-Flow-Zelle möglich wird. Es wird vermutet, dass dies vornehmlich durch die großen Kontaktflächen der relativ groben, folienförmigen Graphitplättchen begründet ist, so dass sich auch bei relativ geringen Füllgraden, wie z.B. in der Größenordnung von etwa 50 Mass.-%, vorzugsweise bis maximal etwa 60 Mass.-%, elektrisch leitfähige Pfade im Polymergefüge der Kontaktplatte ausbilden können, welche für eine entsprechende elektrische Leitfähigkeit sorgen. Ferner ergeben sich durch die erfindungsgemäßen, folienförmigen Graphitplättchen aus expandierter Graphitfolie für Redox-Flow-Zellen hinreichend hohe elektrische Leitfähigkeiten sowohl senkrecht zur Plattenebene ("through-plane") als auch insbesondere parallel zur Plattenebene ("in-plane"). Die durch die erfindungsgemäßen, folienförmigen Graphitplättchen aus expandierter Graphitfolie in der Polymermatrix der Kontaktplatte erzeugten Strompfade mögen dabei zwar gegenüber herkömmlichen Kontaktplatten, z.B. auf der Basis von Kugelgraphit, inhomogener sein, doch bilden die entlang ihrer Ebene sehr stark elektrisch leitfähigen, im Wesentlichen folienförmigen Graphitplättchen aus expandierter Graphitfolie demgegenüber längere und flächigere elektrische Leiterpfade aus, so dass die Kontaktplatte aufgrund dieser, in der Polymermatrix der Kontaktplatte statistisch verteilten, hochleitfähigen Strukturen über ihre Fläche hinweg gleichwohl einen deutlich geringeren elektrischen Widerstand besitzt.

Ein weiterer Vorteil der erfindungsgemäßen Kontaktplatte besteht darin, dass sie aufgrund des verhältnismäßig hohen Polymeranteils, welcher die Schmelzfähigkeit des Kompositmaterials (thermoplastisches Polymer/leitfähige Partikel) aufrechterhält, eine deutlich erhöhte chemische Beständigkeit sowie insbesondere Korrosionsbeständigkeit gegen korrosiven Angriff der oft aggressiven Elektrolyte von Redox-Flow-Zellen aufweist. Darüber hinaus ergibt sich, wie bereits erwähnt, insbesondere eine gute Schweißbarkeit der Kontaktplatte mittels bekannter Kunststoff-Schweißverfahren, wie Laserschweißen, Mikrowellenschweißen, Induktionsschweißen und dergleichen, um sie ohne Zwischenanordnung von Dichtungen stoffschlüssig an einen Durchflussrahmen oder andere Trag- oder Gehäuseteile von Redox-Flow-Zellen anbinden zu können.

Bei dem Matrixpolymer der erfindungsgemäßen Kontakt- oder Bipolarplatte, handelt es sich, wie bereits erwähnt, um wenigstens ein thermoplastisches Polymer einschließlich Polymer-Blends aus mehreren thermoplastischen Polymeren, welches zum Verschweißen in einen schmelzflüssigen Zustand überführt werden kann. Beispiele geeigneter Polymere umfassen Polyolefine, wie Polyethylen (PE), Polypropylen (PP), Polymethylpenten (PMP) und dergleichen, aber auch Polyvinylchlorid (PVC), Polymethylmethacrylat (PMMA) und Polyvinylidenfluorid (PVDF), welche insbesondere auch eine hinreichende chemische Inertheit besitzen, um für Redox-Flow-Zellen auf der Basis von Vanadiumsalzen Anwendung finden zu können. Weitere beispielhafte Vertreter solcher Polymere umfassen Polycarbonate (PC), Polyamide (PA), Polystyrol (PS), Acrylnitril-Butadien-Styrol (ABS), Polylactid (PLA), Polyalkylenterephthalate, wie Polyethylenterephthalat (PET) und dergleichen, Polyetheretherketone (PEEK), Polyphenylensulfid (PPS), aromatische und aliphatische Polyester, thermoplastische Elastomere auf Olefinbasis (TPO) oder auf Basis von EPDM-Blends (TPE), Polyoxymethylen (POM), Polyphenylenether (PPE), Polyphenylsulfone (PPSU), Polysulfone (PSU) und Polytetrafluorethylen (PTFE).

Zum Erzielen einer hohen elektrischen Leitfähigkeit bei einem gleichwohl möglichst geringen Anteil an leitfähigen Graphitpartikeln sieht die Erfindung vor, dass es sich bei zumindest einigen der elektrisch leitfähigen Partikel auf der Basis von Graphit um folienförmige Graphitplättchen von expandierter Graphitfolie handelt, welche eine äußerst hohe elektrische Leitfähigkeit in der Folienebene besitzen. Derartige expandierte Graphitfolien können beispielsweise aus insbesondere hochkristallinem, etwa plättchen- bzw. schuppenförmigen Naturgraphit erhalten werden, indem letzterer mittels eines Einlagerungsmittels in ein Graphitsalz überführt und anlässlich einer anschließenden Thermoschockbehandlung expandiert bzw. aufgebläht wird, wobei das flüchtige Einlagerungsmittel entweichen kann. Das Volumen der ursprünglich eingesetzte Graphitflocken wird dabei um einen Faktor von deutlich größer 100 vergrößern, so dass der fertig expandierte Graphit eine Struktur aus lockeren, wurmähnlichen Gebilden aufweist, welche sodann, beispielsweise mittels Pressen bzw. Kalandrieren, zu der entsprechenden Graphitfolie verdichtet wird. Genauer können solche expandierten Graphitfolien insbesondere dadurch hergestellt werden, indem zur Erzeugung des expandierten Graphits z.B. Naturgraphit in Gegenwart einer Säure und eines Oxidationsmittels unter Wärmeeinwirkung zu Graphenoxid umgesetzt wird, welches anschließend zu expandiertem Graphit reduziert wird, wonach der expandierte Graphit wiederum z.B. mittels Pressen bzw. Kalandrieren zu der expandierten Graphitfolie verdichtet wird. Expandierte Graphitfolien sind beispielsweise unter dem Handelsnamen "SIGRAFLEX" der *SGL CARBON SE* (Deutschland) kommerziell erhältlich und finden vornehmlich für Dichtungs- oder andere Hochtemperaturanwendungen Verwendung. Sie können ferner mit einer Beschichtung aus Polymeren versehen sein, um sie vor äußeren Einwirkungen zu schützen, wobei sie in diesem Fall beispielsweise auch zur Wärmeableitung in elektrischen oder elektronischen Gehäusen dienen können (EP 1 800 764 B1).

Die erfindungsgemäße Kontaktplatte bietet sich folglich als Bipolarplatte für Redox-Flow-Zellen bzw. -Batterien an, bei welchen sie unter Vermeidung des Einsatzes von Dichtelementen direkt stoffschlüssig mit Durchflussrahmen oder anderen Gehäuseteilen verbunden, insbesondere verschweißt bzw. verschmolzen, werden kann. Bei einer mit wenigstens einer solchen elektrisch leitfähigen Kontaktplatte versehenen Redox-Flow-Zelle kann daher insbesondere vorgesehen sein, dass die elektrisch leitfähige Kontaktplatte mit einem Durchflussrahmen oder mit einem anderen Teil eines Gehäuses der Redox-Flow-Zelle stoffschlüssig verbunden ist, indem sie hiermit verschweißt ist.

Bei dem erfindungsgemäßen Verfahren zur Herstellung der für Redox-Flow-Zellen geeigneten, elektrisch leitfähigen Kontaktplatte können gemäß dem Schritt (d) grundsätzlich beliebige thermoplastische Verarbeitungsverfahren zum Einsatz gelangen, wobei eine Vormischung aus dem für das Matrixmaterial eingesetzten wenigstens einen thermoplastischen Polymer mit den folienförmigen Graphitplättchen aus expandierter Graphitfolie beispielsweise mittels Extrudern oder Knetern compoundiert werden kann, welche sodann mittels entsprechender Formwerkzeuge zu der Kontaktplatte spritzgegossen werden kann, wobei insbesondere sogleich die für Redox-Flow-Zellen erforderlichen Fluidkanäle vorgesehen werden können. Überdies ist beispielsweise eine Erzeugung der Kontaktplatte mittels Heißpressen möglich, welchen ein entsprechender Compound aufgegeben wird.

Wie bereits angedeutet, sollten die leitfähigen Partikel in Form von folienförmigen Graphitplättchen aus expandierter Graphitfolie in möglichst grober Form vorliegen, wobei ihre Dicke sehr klein gegenüber ihrem maximalen Durchmesser sein sollte. Demgemäß kann in vorteilhafter Ausgestaltung vorgesehen sein, dass die in das wenigstens eine thermoplastische Polymer eindispergierten, folienförmigen Graphitplättchen aus expandierter Graphitfolie der Kontaktplatte wenigstens einen Geometrieparameter aus der Gruppe
- eine Dicke zwischen etwa 1 µm und etwa 750 µm, insbesondere zwischen etwa 5 µm und etwa 500 µm, vorzugsweise zwischen etwa 10 µm und etwa 250 µm, höchst vorzugsweise zwischen etwa 15 µm und etwa 200 µm, wie beispielsweise zwischen etwa 20 µm und etwa 150 µm;
- einen maximalen Durchmesser zwischen etwa 100 µm und etwa 10 mm, insbesondere zwischen etwa 200 µm und etwa 8 mm, vorzugsweise zwischen etwa 300 µm und etwa 6 mm, höchst vorzugsweise zwischen etwa 400 µm und etwa 6 mm, wie beispielsweise zwischen etwa 500 µm und etwa 5 mm; und
- ein Verhältnis von Dicke zu maximalem Durchmesser von höchstens etwa 0,2, wie beispielsweise von höchstens etwa 0,1,
aufweisen. Als wichtig erweist sich dabei insbesondere das vorgenannte Verhältnis von Dicke zu Durchmesser der im Wesentlichen folienförmigen Graphitplättchen, welches insbesondere auch kleiner als 0,1, wie beispielsweise im Bereich zwischen etwa 0,02 und etwa 0,1, betragen kann, um für die flächige Erstreckung der leitfähigen Graphitpartikel zu sorgen. In jedem Fall erweist es sich als erfindungswesentlich, dass die leitfähigen, folienförmigen Graphitplättchen aus expandierter Graphitfolie nicht etwa vornehmlich globular oder faserförmig sind, sondern eine flächige Erstreckung in wenigstens einer, insbesondere in genau einer, Ebene besitzen, wobei sie beispielsweise im Wesentlichen runde oder ovale, annähernd quadratische oder rechteckige sowie unregelmäßig mehreckige Formen besitzen können, wie sie z.B. beim mechanischen Zerkleinern der expandierten Graphitfolie erhalten werden können.

In Bezug auf das erfindungsgemäße Herstellungsverfahren kann demnach vorteilhafterweise vorgesehen sein, dass die expandierte Graphitfolie gemäß Schritt (b) zu den folienförmigen Graphitplättchen zerkleinert wird, welche wenigstens einen Geometrieparameter aus der Gruppe
- eine Dicke zwischen etwa 1 µm und etwa 750 µm, insbesondere zwischen etwa 5 µm und etwa 500 µm, vorzugsweise zwischen etwa 10 µm und etwa 250 µm, höchst vorzugsweise zwischen etwa 15 µm und etwa 200 µm, wie beispielsweise zwischen etwa 20 µm und etwa 150 µm;
- einen maximalen Durchmesser zwischen etwa 100 µm und etwa 10 mm, insbesondere zwischen etwa 200 µm und etwa 8 mm, vorzugsweise zwischen etwa 300 µm und etwa 6 mm, höchst vorzugsweise zwischen etwa 400 µm und etwa 6 mm, wie beispielsweise zwischen etwa 500 µm und etwa 5 mm; und
- ein Verhältnis von Dicke zu maximalem Durchmesser von höchstens etwa 0,2, wie beispielsweise von höchstens etwa 0,1,
aufweisen. Die Zerkleinerung kann beispielsweise mittels Schreddern geschehen, wonach die gewünschte Größenfraktion durch Klassieren, wie beispielsweise Sieben, erhalten und mit der bzw. den thermoplastischen Polymerkomponente(n) compoundiert werden kann.

In verfahrenstechnischer Hinsicht kann ferner vorzugsweise vorgesehen sein, dass als elektrisch leitfähige expandierte Graphitfolie gemäß Schritt (a) expandierte Graphitfolienfragmente aus Stanzabfällen verwendet werden. Letzteres bietet sich insbesondere sowohl aus Umweltschutz- als auch aus Kostengründen an, weil derartige Stanzabfälle von expandierten Graphitfolien bei der Produktion von Dichtungen in relativ großem Umfang anfallen und somit kostengünstig und ressourcenschonend erhältlich sind. Gleichwohl kann freilich auch eine neu hergestellte expandierte Graphitfolie verwendet oder kann eine solche, z.B. in der weiter oben beschriebenen Weise, erst erzeugt werden, um sie in dem erfindungsgemäßen Verfahren einsetzen zu können.

Wie bereits erwähnt, bietet die erfindungsgemäße Kontaktplatte eine für Redox-Flow-Zellen hinreichend hohe elektrische Leitfähigkeit bei einem gegenüber dem Stand der Technik reduzierten Anteil an elektrisch leitfähigen Graphitpartikeln, welcher stets nur so hoch gewählt wird, dass das Kompositmaterial aus thermoplastischem Matrixpolymer und elektrisch leitfähigen Partikeln schmelzfähig und somit verschweißbar bleibt. Wenngleich die Verschweißbarkeit freilich nicht ausschließlich durch den Füllgrad bestimmt wird, sondern auch von dem jeweils verwendeten, wenigstens einen thermoplastischen Polymer abhängt, sieht die Erfindung hinsichtlich einer hohen elektrischen Leitfähigkeit in Verbindung mit einer guten Verschweißbarkeit je nach verwendetem Polymermaterial vor, dass der Anteil an im Wesentlichen folienförmigen Graphitplättchen zwischen etwa 40 Mass.-% und etwa 65 Mass.-%, insbesondere zwischen etwa 45 Mass.-% und etwa 65 Mass.-%, vorzugsweise zwischen etwa 45 Mass.-% und etwa 60 Mass.-%, wie höchst vorzugsweise zwischen etwa 45 Mass.-% und weniger als etwa 60 Mass.-%, bezogen auf die Gesamtmasse des wenigstens einen thermoplastischen Polymers einschließlich der elektrisch leitfähigen Partikel auf der Basis von Graphit, beträgt.

In Bezug auf das erfindungsgemäße Herstellungsverfahren der Kontaktplatte sieht die Erfindung demnach vor, dass der Anteil an folienförmigen Graphitplättchen aus expandierter Graphitfolie zwischen etwa 40 Mass.-% und etwa 65 Mass.-%, insbesondere zwischen etwa 45 Mass.-% und etwa 65 Mass.-%, vorzugsweise zwischen etwa 45 Mass.-% und etwa 60 Mass.-%, wie höchst vorzugsweise zwischen etwa 45 Mass.- % und weniger als etwa 60 Mass.-%, bezogen auf die Gesamtmasse des wenigstens einen thermoplastischen Polymers der fertigen Kontaktplatte einschließlich der elektrisch leitfähigen Partikel auf der Basis von Graphit, gewählt wird.

Während die erfindungsgemäße Kontaktplatte insbesondere auch praktisch ausschließlich elektrisch leitfähige Partikel von im Wesentlichen folienförmigen Graphitplättchen aus expandierter Graphitfolie enthalten kann, kann gemäß einer vorteilhaften Weiterbildung der erfindungsmäßen Kontakt- bzw. Bipolarplatte auch vorgesehen sein, dass sie ferner in das wenigstens eine thermoplastische Polymer eindispergierte, elektrisch leitfähige, aber nicht folienförmige Partikel auf der Basis von Graphit enthält, insbesondere in Form vom Kohlenstoff-Nanoröhren. Derartige sekundäre leitfähige Partikel vermögen in einigen Fällen die elektrische Leitfähigkeit der Kontaktplatte bereits bei sehr geringen Füllgraden an im Wesentlichen folienförmigen Graphitplättchen in der Größenordnung von etwa 50 Mass.-% deutlich zu erhöhen, so dass sich zum Erreichen einer vorgegebenen elektrischen Leitfähigkeit ein insgesamt noch geringerer Füllgrad (in Bezug auf die Gesamtmenge aller Graphitpartikel) ergeben kann. Kohlenstoff-Nanoröhren ("carbon nanotubes") sind als solches bekannt und können z.B. als einwandige (single wall), doppelwandige (double wall) oder mehrwandige (multi wall) Nanoröhren und/oder in Form von modifizierten, Seitengruppen aufweisenden Kohlenstoff-Nanoröhren eingesetzt werden.

Der Anteil an elektrisch leitfähigen, nicht folienförmigen Partikeln auf der Basis von Graphit sollte zweckmäßigerweise geringer sein als der Anteil an folienförmigen Graphitplättchen und kann vorzugsweise bis zu etwa 8 Mass.- %, insbesondere bis zu etwa 5 Mass.-%, wie beispielsweise zwischen etwa 0,5 Mass.-% und etwa 5 Mass.- %, bezogen auf die Gesamtmasse des wenigstens einen Polymers einschließlich aller elektrisch leitfähiger Partikel, betragen.

In verfahrenstechnischer Hinsicht kann demnach vorgesehen sein, dass in das plastifizierte thermoplastische Polymer ferner elektrisch leitfähige, aber nicht folienförmige Partikel auf der Basis von Graphit, insbesondere in Form vom Kohlenstoff-Nanoröhren, eindispergiert werden. Der Anteil an elektrisch leitfähigen, nicht folienförmigen Partikeln kann dabei vorzugsweise mit bis zu etwa 8 Mass.-%, insbesondere bis zu etwa 5 Mass.-%, bezogen auf die Gesamtmasse des wenigstens einen Polymers der fertigen Kontaktplatte einschließlich aller elektrisch leitfähiger Partikel, gewählt werden.

Wie bereits erwähnt, macht es die Erfindung schließlich insbesondere möglich, dass die Kontaktplatte einen hiermit stoffschlüssig verbundenen Durchflussrahmen aufweist, um die aus Kontaktplatte und hiermit verschweißtem Durchflussrahmen gebildete, dichte Einheit in einer Redox-Flow-Zelle verbauen zu können, ohne für zusätzliche Abdichtungen der Kontaktplatte sorgen zu müssen.

In verfahrenstechnischer Hinsicht kann diesbezüglich vorgesehen sein, dass die Kontaktplatte ferner stoffschlüssig mit einem Durchflussrahmen verschweißt wird.

Nachstehend ist die Erfindung anhand von Ausführungsbeispielen näher erläutert.

### Beispiel 1:

Kontaktplatte in Form einer für Redox-Flow-Batterien geeigneten, chemisch resistenten Bipolarplatte:

| | |
|---|---|
| Matrixpolymer: | 40 Mass.-% Polypropylen; |
| Füllstoff: | 60 Mass.-% folienförmige Plättchen aus expandierter Graphitfolie mit einer Dicke von etwa 100 µm und einem Durchmesser von etwa 3 mm. |
| Herstellung: | - Zerkleinern der expandierten Graphitfolie durch Schreddern und Bereitstellen einer Partikelgrößenfraktion mit einem Durchmesser von etwa 3 mm durch Sieben; |
| | - Compoundieren einer Mischung aus 24 g Polypropylen und 36 g der folienförmigen Graphitplättchen in einem Kneter bei einer Temperatur von 220°C und einer Drehzahl von 100 U/min; |
| | - Heißpressen des erhaltenen Compounds zu einer Bipolarplatte mit den Abmessungen 60 mm x 10 mm × 2 mm bei 100 bar. |
| Leitfähigkeit: | "in-plane" *): 53,6 S/cm ± 6,3 S/cm, "through-plane" **): 4,6 S/cm ± 1,5 S/cm. |

### Beispiel 2:

Kontaktplatte in Form einer für Redox-Flow-Batterien geeigneten, chemisch resistenten Bipolarplatte:

| | |
|---|---|
| Matrixpolymer: | 48 Mass.-% Polypropylen; |
| Füllstoffe: | - 50 Mass.-% folienförmige Plättchen aus expandierter Graphitfolie mit einer Dicke von etwa 100 µm und einem Durchmesser von etwa 3 mm, |
| | - 2 Mass.-% Kohlenstoff-Nanoröhren. |
| Herstellung: | - Zerkleinern der expandierten Graphitfolie durch Schreddern und Bereitstellen einer Partikelgrößenfraktion mit einem Durchmesser von etwa 3 mm durch Sieben; |
| | - Compoundieren einer Mischung aus 48 Mass.- % Polypropylen, 50 Mass.-% der folienförmigen Graphitplättchen und 2 Mass-% Kohlenstoff-Nanoröhren in einem Extruder bei 190°C mit einer Schneckendrehzahl von 300 U/min und einem Durchsatz von 5 kg/h und Extrudieren des Compounds bei einer Düsentemperatur von 210°C; |
| | - Heißpressen des erhaltenen Compounds zu einer Bipolarplatte mit den Abmessungen 460 mm x 460 mm x 1,5 mm bei einer Presskraft zwischen 200 bar und 1.000 bar. |
| Leitfähigkeit: | "in-plane" *): 75,9 S/cm ± 24,5 S/cm, |
| | "through-plane" **): 7,0 S/cm ± 1,5 S/cm. |
| (* Die elektrische Leitfähigkeit in Plattenebene ("in-plane" bzw. Querleitfähigkeit) wurde gemäß DIN 51911 (1997-11) Prüfung von Kohlenstoffmaterialien - Bestimmung des spezifischen elektrischen Widerstandes nach dem Strom-Spannungsverfahren - Feststoffe" ermittelt, wobei jeweils fünf Proben gemessen wurden, um den Wert statistisch zu ermitteln. | |
| (** Die elektrische Leitfähigkeit senkrecht zur Plattenebene ("through-plane") wurde mittels zweier goldbeschichteter Kupferelektroden als Sense-Elektrode und Quelle durchgeführt, wobei die Proben zwischen zwei Gas-Diffusionsschichten eingebracht wurden. Es wurden wiederum jeweils fünf Proben gemessen, um den Wert statistisch zu ermitteln. | |

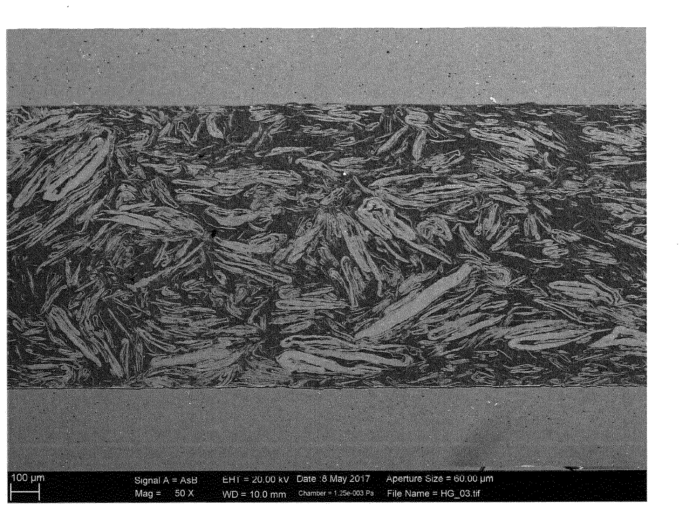

Die einzige Figur zeigt eine
rasterelektronenmikroskopische Aufnahme eines Querschnittes durch die gemäß vorstehendem Beispiel 2 erzeugte Bipolarplatte.

Man erkennt in der Aufnahme das durch Perkolation der vornehmlich in der Ebene der Bipolarplatte (in der dargestellten Figur etwa horizontal) orientierten, elektrisch leitfähigen, folienförmigen Graphitplättchen ausgebildete Netzwerk, bei welchem aufgrund der erfindungsgemäßen Plättchenform des Graphits bei relativ geringem Füllgrad die Perkolationsschwelle bereits erreicht bzw. überschritten worden ist, was - hier in Verbindung mit dem geringen Zusatz an Kohlenstoff-Nanoröhren - zu den sehr hohen elektrischen Leitfähigkeiten von etwa 76 S/cm in der Plattenebene führt.

## Patentansprüche

1. Elektrisch leitfähige Kontaktplatte für Redox-Flow-Zellen, welche aus wenigstens einem thermoplastischen Polymer mit hierin eindispergierten, elektrisch leitfähigen Partikeln auf der Basis von Graphit gebildet ist, **dadurch gekennzeichnet, dass** zumindest einige der elektrisch leitfähigen Partikel von folienförmigen Graphitplättchen aus expandierter Graphitfolie mit einem Verhältnis von Dicke zu maximalem Durchmesser von höchstens 0,3 gebildet sind, deren Anteil zwischen 40 Mass.-% und 65 Mass.-%, bezogen auf die Gesamtmasse des wenigstens einen thermoplastischen Polymers einschließlich der elektrisch leitfähigen Partikel auf der Basis von Graphit, beträgt, wobei die Kontaktplatte aufgrund Schmelzfähigkeit schweißbar ist.

2. Kontaktplatte nach Anspruch 1, **dadurch gekennzeichnet, dass** die in das wenigstens eine thermoplastische Polymer eindispergierten, folienförmigen Graphitplättchen aus expandierter Graphitfolie der Kontaktplatte wenigstens einen Geometrieparameter aus der Gruppe
- eine Dicke zwischen 1 µm und 750 µm, insbesondere zwischen 5 µm und 500 µm, vorzugsweise zwischen 10 µm und 250 µm; und
- einen maximalen Durchmesser zwischen 100 µm und 10 mm, insbesondere zwischen 200 µm und 8 mm, vorzugsweise zwischen 300 µm und 6 mm,
aufweisen.

3. Kontaktplatte nach Anspruch 1 oder 2, **dadurch gekennzeichnet, dass** der Anteil an folienförmigen Graphitplättchen aus expandierter Graphitfolie zwischen 45 Mass.-% und 65 Mass.-%, bezogen auf die Gesamtmasse des wenigstens einen thermoplastischen Polymers einschließlich der elektrisch leitfähigen Partikel auf der Basis von Graphit, beträgt.

4. Kontaktplatte nach einem der Ansprüche 1 bis 3, **dadurch gekennzeichnet, dass** sie ferner in das wenigstens eine thermoplastische Polymer eindispergierte, elektrisch leitfähige, aber nicht folienförmige Partikel auf der Basis von Graphit enthält, insbesondere in Form vom Kohlenstoff-Nanoröhren.

5. Kontaktplatte nach Anspruch 4, **dadurch gekennzeichnet, dass** der Anteil an elektrisch leitfähigen, nicht folienförmigen Partikeln auf der Basis von Graphit bis zu 8 Mass.-%, insbesondere bis zu 5 Mass.-%, bezogen auf die Gesamtmasse des wenigstens einen thermoplastischen Polymers einschließlich aller elektrisch leitfähiger Partikel, beträgt.

6. Kontaktplatte nach einem der Ansprüche 1 bis 5, **dadurch gekennzeichnet, dass** sie einen hiermit stoffschlüssig verbundenen Durchflussrahmen aufweist.

7. Redox-Flow-Zelle mit wenigstens einer elektrisch leitfähigen Kontaktplatte nach einem der vorangehenden Ansprüche.

8. Redox-Flow-Zelle nach Anspruch 7, **dadurch gekennzeichnet, dass** die elektrisch leitfähige Kontaktplatte mit einem Durchflussrahmen oder mit einem anderen Teil eines Gehäuses der Redox-Flow-Zelle stoffschlüssig verbunden ist.

9. Verfahren zur Herstellung einer elektrisch leitfähigen Kontaktplatte für elektrochemische Zellen nach einem der Ansprüche 1 bis 6, **gekennzeichnet durch** die folgenden Schritte:
(a) Bereitstellen einer elektrisch leitfähigen expandierten Graphitfolie;
(b) Zerkleinern der expandierten Graphitfolie unter Erhalt von elektrisch leitfähigen, folienförmigen Graphitplättchen mit einem Verhältnis von Dicke zu maximalem Durchmesser von höchstens 0,3;
(c) Eindispergieren der folienförmigen Graphitplättchen mit einem Anteil zwischen 40 Mass.-% und 65 Mass.- %, bezogen auf die Gesamtmasse des wenigstens einen thermoplastischen Polymers einschließlich der elektrisch leitfähigen Partikel auf der Basis von Graphit, in wenigstens ein plastifiziertes thermoplastisches Polymer; und
(d) Formen der Kontaktplatte aus dem mit den folienförmigen Graphitplättchen versetzten, thermoplastischen Polymer zu der Kontaktplatte mittels thermoplastischer Verarbeitungsverfahren, insbesondere Heißpressen oder Spritzgießen,
um die aufgrund Schmelzfähigkeit schweißbare Kontaktplatte zu erhalten.

10. Verfahren nach Anspruch 9, **dadurch gekennzeichnet, dass** die expandierte Graphitfolie gemäß Schritt (b) zu folienförmigen Graphitplättchen zerkleinert wird, welche wenigstens einen Geometrieparameter aus der Gruppe
- eine Dicke zwischen 1 µm und 750 µm, insbesondere zwischen 5 µm und 500 µm, vorzugsweise zwischen 10 µm und 250 µm; und
- einen maximalen Durchmesser zwischen 100 µm und 10 mm, insbesondere zwischen 200 µm und 8 mm, vorzugsweise zwischen 300 µm und 6 mm,
aufweisen.

11. Verfahren nach Anspruch 9 oder 10, **dadurch gekennzeichnet, dass** als elektrisch leitfähige expandierte Graphitfolie gemäß Schritt (a) Graphitfolienfragmente aus Stanzabfällen verwendet werden.

12. Verfahren nach einem der Ansprüche 9 bis 11, **dadurch gekennzeichnet, dass** der Anteil an folienförmigen Graphitplättchen aus expandierter Graphitfolie zwischen 45 Mass.-% und 65 Mass.-%, bezogen auf die Gesamtmasse des wenigstens einen thermoplastischen Polymers der fertigen Kontaktplatte einschließlich der elektrisch leitfähigen Partikel auf der Basis von Graphit, gewählt wird.

13. Verfahren nach einem der Ansprüche 9 bis 12, **dadurch gekennzeichnet, dass** in das plastifizierte thermoplastische Polymer ferner elektrisch leitfähige, aber nicht folienförmige Partikel auf der Basis von Graphit, insbesondere in Form vom Kohlenstoff-Nanoröhren, eindispergiert werden.

14. Verfahren nach Anspruch 13, **dadurch gekennzeichnet, dass** der Anteil an elektrisch leitfähigen, nicht folienförmigen Partikeln mit bis zu 8 Mass.-%, insbesondere bis zu 5 Mass.-%, bezogen auf die Gesamtmasse des wenigstens einen thermoplastischen Polymers der fertigen Kontaktplatte einschließlich aller elektrisch leitfähiger Partikel, gewählt wird.

15. Verfahren nach einem der Ansprüche 9 bis 14, **dadurch gekennzeichnet, dass** die Kontaktplatte ferner stoffschlüssig mit einem Durchflussrahmen verschweißt wird.

## Claims

1. Electrically conductive contact plate for redox flow cells which is made of at least one thermoplastic polymer with electrically conductive particles based on graphite dispersed therein, **characterized in that** at least some of the electrically conductive particles are formed by sheet-like graphite platelets from expanded graphite foil comprising a ratio of thickness to maximum diameter of not more than 0.3, the proportion of which is in the range from 40% by mass to 65% by mass, based on the total mass of the at least one thermoplastic polymer including the electrically conductive particles based on graphite, with the contact plate being weldable due to fusibility.

2. Contact plate according to Claim 1, **characterized in that** the sheet-like graphite platelets from expanded graphite foil of the contact plate which are dispersed in the at least one thermoplastic polymer have at least one geometric parameter from the group consisting of
- a thickness in the range from 1 µm to 750 µm, in particular from 5 µm to 500 µm, preferably from 10 µm to 250 µm; and
- a maximum diameter in the range from 100 µm to 10 mm, in particular from 200 µm to 8 mm, preferably from 300 µm to 6 mm.

3. Contact plate according to Claim 1 or 2, **characterized in that** the proportion of sheet-like graphite platelets from expanded graphite foil is in the range from 45% by mass to 65% by mass, based on the total mass of the at least one thermoplastic polymer including the electrically conductive particles based on graphite.

4. Contact plate according to any of Claims 1 to 3, **characterized in that** it additionally contains electrically conductive but not sheet-like particles based on graphite, in particular in the form of carbon nanotubes, dispersed in the at least one thermoplastic polymer.

5. Contact plate according to Claim 4, **characterized in that** the proportion of electrically conductive particles based on graphite which are not sheet-like is up to 8% by mass, in particular up to 5% by mass, based on the total mass of the at least one thermoplastic polymer including all electrically conductive particles.

6. Contact plate according to any of Claims 1 to 5, **characterized in that** it has a flow-through frame which is joined thereto by material-to-material bonding.

7. Redox flow cell having at least one electrically conductive contact plate according to any of the preceding claims.

8. Redox flow cell according to Claim 7, **characterized in that** the electrically conductive contact plate is joined by material-to-material bonding to a flow-through frame or to another part of a housing of the redox flow cell.

9. Process for producing an electrically conductive contact plate for electrochemical cells according to any of Claims 1 to 6, **characterized by** the following steps:
(a) Provision of an electrically conductive expanded graphite foil;
(b) Comminution of the expanded graphite foil to give electrically conductive, sheet-like graphite platelets comprising a ratio of thickness to maximum diameter of not more than 0.3;
(c) Dispersion of the sheet-like graphite platelets with a proportion in the range from 40% by mass to 65% by mass, based on the total mass of the at least one thermoplastic polymer including the electrically conductive particles based on graphite, in at least one plasticized thermoplastic polymer; and
(d) Moulding of the contact plate from the thermoplastic polymer admixed with the sheet-like graphite platelets to give the contact plate by means of thermoplastic processing methods, in particular hot pressing or injection moulding,
in order to obtain the contact plate which is weldable due to fusibility.

10. Process according to Claim 9, **characterized in that** the expanded graphite foil is comminuted in step (b) to give sheet-like graphite platelets which have at least one geometric parameter from the group consisting of
- a thickness in the range from 1 µm to 750 µm, in particular from 5 µm to 500 µm, preferably from 10 µm to 250 µm; and
- a maximum diameter in the range from 100 µm to 10 mm, in particular from 200 µm to 8 mm, preferably from 300 µm to 6 mm.

11. Process according to Claim 9 or 10, **characterized in that** graphite foil fragments from stamping offcuts are used as electrically conductive expanded graphite foil in step (a).

12. Process according to any of Claims 9 to 11, **characterized in that** the proportion of sheet-like graphite platelets from expanded graphite foil is selected in the range from 45% by mass to 65% by mass, based on the total mass of the at least one thermoplastic polymer of the finished contact plate including the electrically conductive particles based on graphite.

13. Process according to any of Claims 9 to 12, **characterized in that** electrically conductive but not sheet-like particles based on graphite, in particular in the form of carbon nanotubes, are additionally dispersed in the plasticized thermoplastic polymer.

14. Process according to Claim 13, **characterized in that** the proportion of electrically conductive, not sheet-like particles is selected in the range up to 8% by mass, in particular up to 5% by mass, based on the total mass of the at least one thermoplastic polymer of the finished contact plate including all electrically conductive particles.

15. Process according to any of Claims 9 to 14, **characterized in that** the contact plate is also welded by material-to-material bonding to a flow-through frame.

## Revendications

1. Plaque de contact électriquement conductrice pour batteries à flux redox qui est formée d'au moins un polymère thermoplastique doté de particules électriquement conductrices dispersées à l'intérieur, à base de graphite, **caractérisée en ce qu'**au moins quelques-unes des particules électriquement conductrices des plaquettes de graphite en forme de film sont formées d'un film de graphite expansé comprenant un rapport d'épaisseur sur diamètre maximal de tout au plus 0,3, dont la teneur est comprise entre 40 % en masse et 65 % en masse par rapport à la masse totale de l'au moins un polymère thermoplastique incluant les particules électriquement conductrices à base de graphite, la plaque de contact pouvant être soudée en raison de sa capacité de fonte.

2. Plaque de contact selon la revendication 1, **caractérisée en ce que** les plaquettes de graphite en forme de film composées de film de graphite expansé de la plaque de contact et dispersées dans l'au moins un polymère thermoplastique comportent au moins un paramètre géométrique parmi le groupe :
- une épaisseur comprise entre 1 µm et 750 µm, notamment entre 5 µm et 500 µm, de préférence entre 10 µm et 250 µm ; et
- un diamètre maximal compris entre 100 µm et 10 mm, notamment entre 200 µm et 8 mm, de préférence entre 300 µm et 6 mm .

3. Plaque de contact selon la revendication 1 ou 2, **caractérisée en ce que** la teneur en plaquettes de graphite en forme de film réalisées à partir de film de graphite est comprise entre 45 % en masse et 65 % en masse par rapport à la masse totale de l'au moins un polymère thermoplastique incluant les particules électriquement conductrices à base de graphite.

4. Plaque de contact selon l'une quelconque des revendications 1 à 3, **caractérisée en ce qu'**elle contient en outre dans l'au moins un polymère thermoplastique des particules à base de graphite dispersées électriquement conductrices mais pas en forme de film, notamment en forme de nanotubes de carbone.

5. Plaque de contact selon la revendication 4, **caractérisée en ce que** la teneur en particules à base de graphite électriquement conductrices pas en forme de film peut atteindre 8 % en masse, notamment 5 % en masse, par rapport à la masse totale de l'au moins un polymère thermoplastique incluant toutes les particules électriquement conductrices.

6. Plaque de contact selon l'une quelconque des revendications 1 à 5, **caractérisée en ce qu'**elle comporte un cadre d'écoulement y étant relié par complémentarité de matières.

7. Batterie à flux redox comprenant au moins une plaque de contact électriquement conductrice selon l'une quelconque des revendications précédentes.

8. Batterie à flux redox selon la revendication 7, **caractérisée en ce que** la plaque de contact électriquement conductrice est reliée par complémentarité de matières à un cadre d'écoulement ou à une autre partie d'un carter de la batterie à flux redox.

9. Procédé de fabrication d'une plaque de contact électriquement conductrice pour cellules électrochimiques selon l'une quelconque des revendications 1 à 6, **caractérisé par** les étapes suivantes :
(a) mise à disposition d'un film de graphite expansé électriquement conducteur ;
(b) broyer le film de graphite expansé par obtention de plaquettes de graphite en forme de film électriquement conductrices comprenant un rapport d'épaisseur sur diamètre maximal de tout au plus 0,3 ;
(c) dispersion des plaquettes de graphite en forme de film dans au moins un polymère thermoplastique plastifié, dont la teneur est comprise entre 45 % en masse et 65 % en masse par rapport à la masse totale de l'au moins un polymère thermoplastique incluant les particules électriquement conductrices à base de graphite ; et
(d) formation de la plaque de contact à partir du polymère thermoplastique décalé avec les plaquettes de graphite en forme de film pour former la plaque de contact à l'aide du procédé de traitement thermoplastique, notamment par pression à chaud ou par moulage par injection ;
pour obtenir la plaque de contact pouvant être soudée en raison de sa capacité de fonte.

10. Procédé selon la revendication 9, **caractérisé en ce que** le film de graphite expansé selon l'étape (b) est broyé par obtention de plaquettes de graphite en forme de film présentant au moins un paramètre géométrique parmi le groupe :
- une épaisseur comprise entre 1 µm et 750 µm, notamment entre 5 µm et 500 µm, de préférence entre 10 µm et 250 µm ; et
- un diamètre maximal compris entre 100 µm et 10 mm, notamment entre 200 µm et 8 mm, de préférence entre 300 µm et 6 mm .

11. Procédé selon la revendication 9 ou 10, **caractérisé en ce que** le film de graphite expansé électriquement conducteur selon l'étape (a) utilise des fragments de film de graphite provenant de chutes de découpe.

12. Procédé selon l'une quelconque des revendications 9 à 11, **caractérisé en ce que** la teneur en plaquettes de graphite en forme de film réalisées à partir de film de graphite est sélectionnée entre 45 % en masse et 65 % en masse par rapport à la masse totale de l'au moins un polymère thermoplastique de la plaque de contact finie incluant les particules électriquement conductrices à base de graphite.

13. Procédé selon l'une quelconque des revendications 9 à 12, **caractérisé en ce que** des particules à base de graphite électriquement conductrices mais pas en forme de film, notamment en forme de nanotubes de carbone, sont en outre dispersées dans le polymère thermoplastique plastifié.

14. Procédé selon la revendication 13, **caractérisé en ce que** la teneur en particules électriquement conductrices pas en forme de film peut atteindre 8 % en masse, notamment 5 % en masse, par rapport à la masse totale de l'au moins un polymère thermoplastique de la plaque de contact finie incluant toutes les particules électriquement conductrices.

15. Procédé selon l'une quelconque des revendications 9 à 14, **caractérisé en ce que** la plaque de contact est en outre soudée par complémentarité de matières à un cadre d'écoulement.
